# EUROPÄISCHE PATENTSCHRIFT

(11) **EP 0 672 720 B1**
(45) Veröffentlichungstag und Bekanntmachung des Hinweises auf die Patenterteilung: **23.07.1997**
(21) Anmeldenummer: 95103372.9
(22) Anmeldetag: 09.03.1995
(51) Int. Cl.: C08L 57/04, C08L 71/02, C08K 5/04, D04H 1/64, D06M 15/263, C08J 3/24

(54) **Formaldehydfreie Binde-, Imprägnier- oder Beschichtungsmittel für faserförmige Flächengebilde**
Formaldehyde-free binding, impregnating or coating composition for fibreous sheets
Agent-libre de formaldéhyde-liant, d'imprégnation ou de revêtement pour feuilles renforcées par des fibres

(30) Priorität: 15.03.1994 DE 4408688
(43) Veröffentlichungstag der Anmeldung: 20.09.1995
(73) Patentinhaber: BASF AKTIENGESELLSCHAFT, 67056 Ludwigshafen (DE)
(72) Erfinder: Seyffer, Hermann, Dr., D-69123 Heidelberg (DE); Rupaner, Robert, Dr., D-61476 Kronberg (DE); Günther, Erhard, Dr., D-67454 Hassloch (DE); Hummerich, Rainer, Dr., D-67551 Worms (DE)

(56) Entgegenhaltungen:
- PATENT ABSTRACTS OF JAPAN vol. 9, no. 153 (C-288) & JP-A-60 031 528 (NIPPON SHIKUBAI KK)
- PATENT ABSTRACTS OF JAPAN vol. 9, no. 153 (C-288) & JP-A-60 031 528

## Beschreibung

Die Erfindung betrifft formaldehydfreie Binde-, Imprägnier- oder Beschichtungsmittel, enthaltend
A) ein Polymerisat, welches zu 2 bis 100 Gew.-% aus einer ethylenisch ungesättigten Säure oder einem Säureanhydrid als Comonomer aufgebaut ist und
B) mindestens ein Polyol, ausgewählt aus einem Triazin der Formel 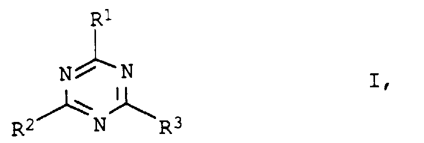 worin R¹ bis R³ unabhängig voneinander für einen Rest X[(CₘH₂ₘO)ₙH] oder N[(CₘH₂ₘO)ₙH]₂ mit X = NH, O, S, m = 2 bis 5 und n = 1 bis 10 stehen,
   einem Triazintrion der Formel 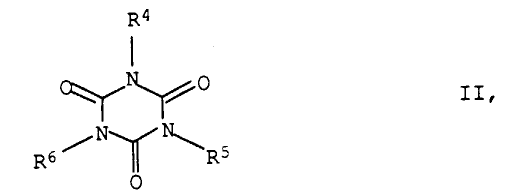 worin R⁴ bis R⁶ unabhängig voneinander für einen Rest [(CₘH₂ₘO)ₙH] mit m = 2 bis 5 und n = 1 bis 10 stehen,
   oder einem Benzolderivat, bzw. einem Cyclohexylderivat, der Formel 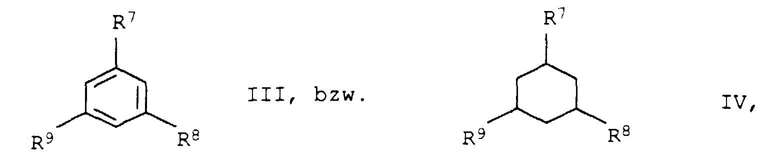 worin R⁷ bis R⁹ unabhängig voneinander für einen Rest [X(CₘH₂ₘO)ₙH], einen Rest N[CₘH₂ₘO)ₙH]₂, einen Rest [Y(CₘH₂ₘO)ₙH] oder einen Rest [(CₘH₂ₘO)ₙH] mit X = NH, O, S, Y = zweiwertige C₁-C₆-Alkyl- oder Acylgruppe, m = 2 bis 5 und n = 1 bis 10, stehen.

Weiterhin betrifft die Erfindung die Verwendung der formaldehydfreien Binde-, Imprägnier- oder Beschichtungsmittel zur Herstellung von faserförmigen Flächengebilden.

Zur Herstellung von gebundenen, flächenförmigen Fasergebilden werden vielfach Bindemittel, welche Formaldehyd abspaltende Vernetzer enthalten, eingesetzt. Zur Vermeidung von Formaldehydemissionen ist der Fachmann bestrebt, Alternativen zu den bisher bekannten Bindemitteln zur Verfügung zu stellen.

Aus der WO 92/09660 und US-A-5 137 963 sind formaldehydfreie Mischungen von Polymeren als Bindemittel für textile Faservliese bekannt. Die Herstellung mehrerer Polymere für ein Bindemittel ist jedoch sehr aufwendig.

In der EP-A-512 732 und EP-A-583 086 werden Bindemittel für Glasfasern beschrieben, welche carbonsäurehaltige Polymerisate und β-Hydroxyalkylamide als Vernetzer enthalten.

Gegenstand der EP-A-445 578 sind Formkörper aus einem Füllstoff, z.B. auch Fasern, und einem Bindemittel. Bei dem Bindemittel handelt es sich um eine Polycarbonsäure und einen mehrwertigen Alkohol, z.B. Glycerin, Alkanolamin oder einen mehrwertigen Amin.

Neben bereits bekannten formaldehydfreien Bindemitteln sind grundsätzlich weitere formaldehydfreie Bindemittel als Alternativen wünschenswert. Insbesondere sollen geeignete Bindemittel für faserförmige Flächengebilde eine gute Wärmeformbeständigkeit und Naßfestigkeit nach der Aushärtung aufweisen. Vorteilhaft ist auch eine flammhemmende Eigenschaft der Bindemittel, wodurch sich der Bedarf an zugesetzten Flammschutzmitteln verringert.

Aufgabe der vorliegenden Erfindung war daher, solche Bindemittel zur Verfügung zu stellen.

Demgemäß wurden die oben beschriebenen Bindemittel, sowie ihre Verwendung zur Herstellung von faserförmigen Flächengebilden gefunden.

Das Polymerisat A) enthält 2 bis 100 Gew.-%, bezogen auf das Polymerisat, bevorzugt 30 bis 100 Gew.-%, besonders bevorzugt 50 bis 100 Gew.-%, ganz besonders bevorzugt 70 bis 100 Gew.-% eines ethylenisch ungesättigten Säureanhydrids oder vorzugsweise einer ethylenisch ungesättigten Säure (im folgenden zusammenfassend acides Comonomer genannt).

Geeignete acide Comonomere haben vorzugsweise eine Wasserlöslichkeit von mindestens 2 g acides Comonomer/100 g Wasser bei 20°C, besonders bevorzugt von mindestens 5 g und ganz besonders bevorzugt von mindestens 10 g/100 g Wasser. Im Falle einer ethylenisch ungesättigten Säure kann diese ganz oder vorzugsweise teilweise bzw. nicht neutralisiert vorliegen.

Als acide Comonomere in Betracht kommen Monocarbonsäuren, wie (Meth)acrylsäure, Crotonsäure, Dicarbonsäuren, wie Maleinsäure, Fumarsäure und Itaconsäure, Sulfonsäuren oder Phosphonsäuren, wie Vinylsulfonsäure, Styrylsulfonsäure, Vinylphosphonsäure, sowie ihre homologen alkylierten Derivate, Anhydride der genannten Säuren oder Halbester der mehrwertigen Säuren mit mindestens einer verbleibenden Säuregruppe.

Bevorzugt sind Carbonsäuren, insbesondere Monocarbonsäuren, wie (Meth) acrylsäure.

Die Säuren können ganz oder vorzugsweise teilweise neutralisiert bzw. nicht neutralisiert sein. Die (Teil-) Neutralisation kann vor, während oder nach der Herstellung des Polymerisats A) erfolgen. Als Neutralisationsmittel kommen basisch reagierende Verbindungen wie wäßrige Lösungen von Ammoniak oder Aminen ebenso wie wäßrige Lösungen von Metallhydroxiden, -carbonaten, -oxiden oder auch -acetaten und -formiaten in Betracht. Als bevorzugte Neutralisationsmittel kommen wäßrige Lösungen oder Suspensionen von Ammoniak, Aminen, Natriumhydroxid, Calciumhydroxid, Magnesiumoxid oder Zinkoxid zum Einsatz. Ganz besonders bevorzugt sind jedoch Ammoniak oder flüchtige Amine, die den Vorteil aufweisen, einen weniger wasserempfindlichen Polymerfilm zurückzulassen. Die Neutralisation wird vorzugsweise nur bis zu einem bestimmten Grad durchgeführt, so daß ein Teil der Carboxylgruppen in Form der Säure vorliegt. Bevorzugt wird ein pH-Wert unterhalb von 7, insbesondere 6,5 eingestellt.

Bei weiteren Comonomeren, die im Polymerisat A) enthalten sein können, handelt es sich z.B. um Acrylamid oder Methacrylamid, durch welche z.B. die Viskosität reguliert werden kann, Vinylaromaten mit bis zu 10 C-Atomen, wie Styrol oder Methylstyrol, (Meth)acrylsäureester, insbesondere C₁-C₁₂-Alkyl(meth)acrylate oder auch C₁-C₁₂-Hydroxyalkyl(meth)acrylate, (Meth)acrylnitril, Vinylester von 1 bis 20 C-Atome enthaltenden Carbonsäuren, Vinylhalogenide, oder weitere Comonomere, welche z.B. auch Epoxid, Hydroxy-, Isocyanat- oder Carbonylgruppen enthalten können. Ebenfalls können im Polymerisat A) vernetzende bi- oder polyfunktionelle Monomere enthalten sein, z.B. Bis- oder Poly(meth)acrylate oder Bisolefine wie Butandioldiacrylat, Trimethylolpropantriacrylat, Divinylbenzol, Triallylcyanurat, Allylmethacrylat, Bis- oder Polyacrylsiloxane (Tegomere® der TH. Goldschmidt AG).

Polymerisat A) ist vorzugsweise bei 20°C wasserlöslich, bzw. weist eine Wasserlöslichkeit von mindestens 10 g pro 100 g Wasser auf.

Die Herstellung der Polymerisate A) kann z.B. in Substanz, in Lösung (z.B. in Wasser) oder Emulsionspolymerisation in Wasser erfolgen. Bei der Herstellung können z.B. auch Polymerisationsregler zur Steuerung des Molekulargewichts eingesetzt werden.

Vorzugsweise beträgt das gewichtsmittlere Molekulargewicht M_{w} der Polymerisate A) 10³ bis 10⁷, besonders bevorzugt 10⁴ bis 10⁶.

Hochmolekulare Polymerisate mit M_{w} > 10⁵ und niedriger Viskosität sind insbesondere durch Emulsionspolymerisation zugänglich.

Die erfindungsgemäßen Bindemittel werden vorzugsweise so erhalten, daß Polyole B) zu einer wäßrigen Lösung oder Dispersion des Polymerisats A) gegeben werden. Die Menge an Polyol wird dabei vorzugsweise so gewählt, daß die Säure- bzw. Säureanhydridgruppen, welche gegebenenfalls auch neutralisiert vorliegen können, zu den Hydroxygruppen des Polyols im Überschuß vorliegen.

Vorzugsweise beträgt das Molverhältnis des Säure- bzw. Säure-anhydridgruppen zu den Hydroxygruppen der Polyole B) 1000:1 bis 1:1, besonders bevorzugt 400:1 bis 5:1.

Bei den Polyolen handelt es sich um die oben beschriebenen Verbindungen der Formeln I bis IV oder deren Mischungen.

Als Triazine der Formel I sind solche mit R¹ bis R³ = [NH-(CₘH₂ₘO)ₙH] bevorzugt. Verbindungen mit n > 1 sind durch Alkoxylierung der entsprechenden Hydroxyalkylmelamine erhältlich.

Besonders bevorzugt sind N,N',N"-Tris(hydroxyalkyl)melamine, z.B. N,N',N"-Tris(hydroxyethyl)melamin. Die Herstellung von Verbindungen der Formel I ist dem Fachmann bekannt und z.B. in EP-A-225 433 beschrieben.

Als Triazintrione der Formel II sind N,N',N''-Tris(hydroxyalkyl)isocyanurate (n = 1), z.B. N,N',N''-Tris(hydroxyethyl)isocyanurat (THEIC) bevorzugt. Derivate mit n > 1 sind durch Alkoxylierung erhältlich.

In bevorzugten Benzol- oder Cyclohexylderivaten der Formeln III bzw. IV steht R⁷ bis R⁹ für [X(CₘH₂ₘO)ₙ] mit X vorzugsweise = 0. Verbindungen mit n > 1 sind wie oben durch Alkoxylierung erhältlich.

Im Falle von Cyclohexylderivaten ist die bevorzugte Konfiguration der Reste R all cis. Die Cyclohexylderivate sind leicht durch katalytische Hydrierung der entsprechenden aromatischen Verbindungen erhältlich. Genannt sei z.B. Tris(hydroxyethyloxy)benzol.

Vorzugsweise sind jeweils die Reste R¹ bis R³, R⁴ bis R⁶ und R⁷ bis R⁹ in den Formeln I bis IV identisch. Die Verbindungen der Formeln I bis V haben vorzugsweise eine C3 oder D3 Symmetrie (mögliche Symmetrieoperationen C3: dreizählige Drehachse; D3: dreizählige Drehachse und zusätzlich drei zweizählige Drehachsen senkrecht dazu (s. Moore Hummel, Physikalische Chemie 3. Auflage Berlin 1983, S. 872 ff.). Bei den Verbindungen können auch noch weitere Symmetrieoperationen möglich sein.

Dispersionen oder Lösungen, welche die Polymeren A) und Verbindungen B) enthalten, können als Binde-, Imprägnier- oder Beschichtungsmittel verwendet werden. Den Dispersionen oder Lösungen können z.B. Pigmente, Füllstoffe, Flammschutzmittel, Dispergierhilfsmittel, Verdicker, Vernetzer, Weichmacher, Farbstoffe, Netzmittel, Hydrophobiermittel, Aufheller, Filmbildehilfsmittel, Konservierungsmittel oder Entschäumer zugesetzt werden.

Desweiteren können auch Katalysatoren für eine Vernetzungsreaktion von A) mit B), z.B. Säuren wie Schwefelsäure oder p-Toluolsulfonsäure zugegeben werden.

Insbesondere eignen sich die Lösungen bzw. Dispersionen als Bindemittel zur Herstellung von faserförmigen Flächengebilden, auch Vliesstoffe genannt. Dabei wird die Lösung oder Dispersion auf ein ungebundenes Rohfaservlies, vorzugsweise in einem Verhältnis Faser/Bindemittel (Feststoff) von 6:1 bis 3:1 Gewichtsteilen aufgetragen.

Das Gewicht des Rohfaservlieses kann z.B. zwischen 20 bis 500 g pro m² liegen.

Das Bindemittel wird vorzugsweise in Form einer verdünnten wäßrigen Flotte (d.h. etwa 20 bis 40 gew.-%ig) auf die Fasern aufgetragen oder in Form einer Imprägnierung in einem Horizontalfoulard beschichtet, wobei die Konzentration des Bindemittels in der wäßrigen Flotte vorzugsweise 5 bis 25 Gew.-% beträgt. Gegebenenfalls kann ein Überschuß an Bindemittel anschließend abgequetscht oder abgesaugt werden, bevor durch Trocknung die Verfestigung erzielt wird und der Vliesstoff gebunden wird. Die Trocknung erfolgt vorzugsweise bei Temperaturen zwischen 100 und 400, insbesondere 130 und 280°C über einen Zeitraum von vorzugsweise 2 bis 10 min. Bei der Trocknung vernetzt das Bindemittel und verleiht dem nun gebundenen Vliesstoff die notwendige Festigkeit. Mit den erfindungsgemäßen Bindemitteln werden bei völliger Formaldehydfreiheit außerordentlich gute Wärmestandfestigkeiten erreicht. Unter Wärmestandfestigkeit soll dabei der mechanische Widerstand verstanden werden, den der Verbund Faser/Polymer einer angelegten Zugbeanspruchtung (z.B. auch bei hohen Temperaturen wie 180°C) entgegensetzt. Gleichzeitig werden auch sehr gute Festigkeiten des nassen Vliesstoffs erreicht (Naßfestigkeiten), wodurch ein Zerreißen der Vliesstoffbahn durch Zugbeanspruchungen während der Beschichtung oder Trocknung beim Transport durch Bänder oder Walzen weitgehend verhindert wird.

Nach dem Trocknen sind kaum Vergilbungen festzustellen und ein Auskochen des Vliesstoffs mit Wasser führt kaum zu Gewichtsverlusten.

Die Schichtdicke von gebundenen Vliesstoffen liegt vorzugsweise zwischen 0,5 und 3 mm.

Das erfindungsgemäße Bindemittel bewirkt im Vliesstoff gleichzeitig einen gewissen Flammschutz, wodurch sich gegebenenfalls notwendige Zusatzmengen von Flammschutzmitteln verringern.

Das erfindungsgemäße Bindemittel eignet sich besonders zur Herstellung von Vliesstoffen auf Basis von Aramid-, Kohlenstoff-, Mineral-Polyacrylnitril- oder Polyesterfasern, besonders bevorzugt Glasfasern.

Vliesstoffe auf Basis der voranstehend genannten Fasern eignen sich insbesondere auch als Inliner in bitumierten Dachbahnen, in Bodenbelägen, als Filtermaterial oder auch als Batterieseparatoren.

### Beispiele

Abkürzungen
- THOM: N,N',N"-Tris-(5-hydroxy-3-oxa-pentyl)-melamin
- THEM: N,N',N",-Tris-(2-hydroxyethyl)-melamin
- TAHM: N,N',N",-Tris-(6-aminohexyl)-melamin
- HOM 154: Gemisch aus Mono-, Bis- und Tris-N-(hydroxyethyl)-melamin im Verhältnis 1:5:4
- THEIC: N,N',N"-Tris-(hydroxyethyl)-isocyanurat
- HHEM: N,N,N',N',N",N"-Hexakis(hydroxyethyl)melamin

### Prüfmethoden:

### a) Gelpermeationschromatographie (GPC)

Die Bestimmung der molaren Masse erfolgt durch Gel-Permeations-Chromatographie (= GPC) mit wäßrigen Elutionsmitteln. Die Eichung der Trennsäulen erfolgte mit eng verteilten Polystyrolsulfonaten der Fa. Pressure Chem. Comp. und Umrechnung auf die molaren Masseneinheiten von Natriumpolyacrylat nach dem universellen Eichprinzip von Benoit (J. Chim. Phys. 63 [1966], 1507) unter Verwendung von Meßdaten von Spatorico und Beyer (J. Appl. Polym. Sci. 19 [1975], 2933).

### b) K-Wert

Der K-Wert ist eine Kenngröße zur Charakterisierung des Polymerisationsgrades und wurde nach Fikentscher, Cellulose Chemie 13, 58 (1932) an einer 1 %igen wäßrigen Lösung bei pH = 7 gemessen.

### Beispiel 1

### Einfluß der Trockentemperatur

### Bindemittel:

Zu 100 Teilen einer 25 gew.-%igen, wäßrigen Lösung einer Polymethacrylsäure mit einem mittleren Molekulargewicht von M_{w} = 20 000 und einem K-Wert von 50 wurde unter Rühren 1,3 Teile (entspricht 5 Gew.-% bez. auf die Polymethacrylsäure) THOM als 95 %ige Lösung bei 25°C zugegeben. Bis zur Homogenisierung wurde 15 min nachgerührt. Die resultierende Lösung wies einen pH-Wert von 2,2 auf.

### Imprägnierung, Trocknung und Zuguntersuchungen:

Die Bindemittellösung wurde mit Wasser auf einen Gesamtfeststoffanteil von 15 Gew.-% verdünnt und in die Imprägnierwanne gefüllt. Als Rohvlies wurden mit Melaminformaldehyd-Harzen leicht vorgebundene Glasfaservliese (ca. 7 % Bindemittelauftrag, Flächengewicht ca. 50 g/m²) im Formal 26,5 x 32,5 cm verwendet. Nach 2 x 20 sec. Eintauchen in die Imprägnierflotte wurde der Überschuß an Bindemittel bis zum Erreichen eines Bindemittelanteiles von 20 % (bez. auf das Gesamtgewicht) abgesaugt und das imprägnierte Glasvlies in einem Mathis-Ofen 6 min bei der eingestellten Temperatur getrocknet. Aus dem Glasfaserbogen wurden 50 mm breite Streifen abgeschnitten und in einer Zugprüfmaschine mit 50 mm/min bis zum Reißen gedehnt. Entsprechende Prüfstreifen wurden zur Messung der Naßfestigkeit vor Prüfung 15 min in Wasser bei 80°C eingelegt und im feuchten Zustand bei der angegebenen Temperatur gerissen (Reißkraft, RK). Die Ergebnisse der Messungen (Mittelwert von 5 Prüfkörpern) sind in Newton (N) angegeben und beziehen sich auf 50 mm Prüfstreifenbreite. Zur Ermittlung des Kochverlustes (KV) wurde die gravimetrische Abnahme des Vliesgewichtes nach 15 min Auskochens in destilliertem Wasser bestimmt.

| Trocknungstemp. in °C | RK, trocken bei 25°C | RK, naß bei 25°C | RK, naß bei 80°C | RK bei 180°C | KV in % |
|---|---|---|---|---|---|
| 200 | 196 | 180 | 34 | 119 | 3,7 |
| 210 | 225 | 183 | 58 | 140 | 2,8 |
| 220 | 224 | 185 | 98 | 168 | 2,4 |
| 230 | 206 | 181 | 98 | 184 | 2,6 |
| 240 | 195 | 165 | 132 | 158 | 2,8 |

### Beispiel 2

Wie Beispiel 1, mit dem Unterschied, daß die Polymethacrylsäurelösung mit 15 Gew.-% HOM 154 versetzt wurde, und nach Homogenisierung Glasvliese imprägniert und 6 min bei unterschiedlicher Temperatur getrocknet wurden.

| Trocknungstemp. in °C | RK, trocken bei 25°C | RK, naß bei 25°C | RK, naß bei 80°C | RK bei 180°C | KV in % |
|---|---|---|---|---|---|
| 180 | 217 | 113 | 35 | 202 | 4,7 |
| 190 | 260 | 179 | 43 | 178 | 2,8 |
| 200 | 261 | 194 | 63 | 171 | 1,6 |
| 210 | 263 | 224 | 109 | 182 | 1,6 |
| 220 | 243 | 211 | 148 | 204 | 1,0 |
| 230 | 246 | 206 | 170 | 182 | 1,0 |

### Beispiel 3

### Einfluß der Trockenzeit

Beispiel 1 wurde mit dem Unterschied wiederholt, daß die Trocknung der imprägnierten Glasvliese unterschiedlich lang bei 230°C durchgeführt wurde.

| Trocknungszeit in min | RK, trocken bei 25°C | RK, naß bei 25°C | RK, naß bei 80°C | RK bei 180°C | KV in % |
|---|---|---|---|---|---|
| 2 | 205 | 201 | 47 | 117 | 2,6 |
| 4 | 215 | 190 | 72 | 149 | 2,5 |
| 6 | 200 | 178 | 109 | 145 | 2,3 |
| 8 | 189 | 176 | 107 | 161 | 2,4 |
| 10 | 210 | 168 | 116 | 177 | 2,4 |
| 12 | 207 | 174 | 125 | 172 | 2,5 |
| 10* | 232 | 193 | 146 | 193 | 1,8 |

| | | | | | |
|---|---|---|---|---|---|
| ^{*)} enthielt doppelte Menge an THOM | | | | | |

### Beispiel 4

Einsatz verschiedener Melamin-Derivate und Vergleichssubstanzen

Eine 25 gew.-%ige, wäßrige Lösung einer Polymethacrylsäure aus Beispiel 1 wurde mit einer 25 gew.-%igen, wäßrigen Lösung bzw. Suspension der Polyhydroxykomponente bei 25°C tropfenweise versetzt und 15 min nachgerührt, in der Weise, daß jeweils 5 Gew.-% an Vernetzer, bezogen auf die Gesamtmasse an Polymethacrylsäure zugesetzt war. Diese Lösung wurde auf 20 Gew.-% verdünnt und ohne weitere Zusätze zur Imprägnierung von Glasvliesen eingesetzt.

Trocknungsbedingungen: 6 min bei 230°C.

| Vernetzungssubstanz | RK, trocken bei 25°C | RK, naß bei 25°C | RK, naß bei 80°C | RK bei 180°C | KV in % |
|---|---|---|---|---|---|
| THOM | 213 | 174 | 96 | 140 | 3 |
| THEM | 204 | 178 | 141 | 165 | 3 |
| THEIC* | 267 | 185 | 78 | 170 | 1,5 |
| HOM 154 | 195 | 180 | 82 | 127 | 2,5 |
| HHEM | 234 | 213 | 177 | 205 | 1,0 |
| | | | | | |
| V1 | fällt aus | - | - | - | - |
| V2 | 188 | 127 | 40 | 98 | 3,2 |
| V3 | fällt aus | - | - | - | - |
| V4 | 192 | 185 | 77 | 132 | 1,8 |
| V5 | 164 | 114 | 60 | 131 | 11,5 |
| V6 | 180 | 163 | 56 | 129 | 4,4 |
| V7 | 209 | 152 | 61 | 188 | 5,6 |
| V8 | fällt aus | - | - | - | - |
| V1: Ethoxiliertes Ethylendiamin, EO-Grad ca. 12 | | | | | |
| V2: Polyethylenglykol, MG ca. 200 | | | | | |
| V3: Polyhydroxyethylacrylat | | | | | |
| V4: Bis[N,N-di(β-hydroxyethyl)] adipinsäurediamid, EP 512 732, Bsp. 1 | | | | | |
| V5: hochviskoser Polyvinylalkohol | | | | | |
| V6: Glycerin | | | | | |
| V7: Handelsübliches Harnstoff-Formaldehydharz (2-3 Gew.-% freier Formaldehyd) | | | | | |
| V8: TAHM | | | | | |

| | | | | | |
|---|---|---|---|---|---|
| ^{*)} 10 Gew.-% eingesetzt (bezogen auf Polymethacrylsäure) ^{**)} 16 Gew.-% eingesetzt (bezogen auf Polymethacrylsäure) | | | | | |

Die Prüfungen zeigen, daß aminhaltige Vernetzungsmittel flokkulierend wirken, überwiegend linear aufgebaute Polyole deutliche Schwächen in der 180°C-Festigkeit aufweisen und Polyole wie Glycerin oder Polyvinylalkohol zu starkem Kochverlust führen.

### Beispiel 5

### Verschiedene Polycarbonsäuren

Analog Beispiel 1 werden wäßrige Lösungen von Polyacrylsäuren unterschiedlicher Molekularmasse mit jeweils 5 Gew.-% (bez. auf Feststoff an Polyacrylsäure) mit einer 25 %igen, wäßrigen Lösung von HOM 154 abgemischt.

| Polyacrylsäure | RK, trocken bei 25°C | RK, naß bei 25°C | RK, naß bei 80°C | RK bei 180°C | KV in % |
|---|---|---|---|---|---|
| 1 | 152 | 108 | 49 | 87 | 9,6 |
| 2 | 158 | 131 | 74 | 142 | 4,5 |
| 3 | 199 | 178 | 70 | 136 | 2,0 |
| 4 | 221 | 45 | 9 | 161 | 5,5 |
| 5 | 202 | 112 | 57 | 159 | 5,7 |
| 1 50 %ige Lösung einer Polyacrylsäure, M_{w} = 4000, K-Wert = 20 | | | | | |
| 2 50 %ige Lösung eines Maleinsäure/Acrylsäure-Copolymerisates, M_{w} = 3000, K-Wert = 20 | | | | | |
| 3 25 %ige Lösung einer Polyacrylsäure, M_{w} = 20 000, K-Wert = 50 | | | | | |
| 4 Natriumsalz eines Maleinsäure/Acrylsäure-Copolymerisates, M_{w} = 70 000, K-Wert = 60 | | | | | |
| 5 wie 4, aber Flotte mit konz. Salzsäure auf pH = 1 gestellt. | | | | | |

### Beispiel 6

### Unterschiedlicher Anteil an HOM 154

Beispiel 1 wird wiederholt, mit dem Unterschied, daß der Anteil an Vernetzer stufenweise erhöht wurde.
Trocknungsbedingungen: 6 min bei 230°C.

| Anteil HOM 154 in % | RK, trocken bei 25°C | RK, naß bei 25°C | RK, naß bei 80°C | RK bei 180°C | KV in % |
|---|---|---|---|---|---|
| 0* | | | | | |
| 5 | 201 | 161 | 69 | 113 | 1,9 |
| 10 | 226 | 203 | 137 | 171 | 0,8 |
| 15 | 242 | 201 | 158 | 147 | 0,5 |
| 20 | 235 | 211 | 160 | 163 | 0,4 |
| 25 | 226 | 213 | 155 | 158 | 0,3 |
| 30 | 242 | 200 | 167 | 168 | 0,1 |
| 35 | 239 | 206 | 171 | 168 | 0,3 |
| 40 | nicht mehr mischbar | | | | |
| 25** | 234 | 183 | 156 | 153 | 0,9 |

| | | | | | |
|---|---|---|---|---|---|
| ^{*)} Vergleichsversuch | | | | | |
| ^{**)} Polyacrylsäure mit niedrigerem Molekulargewicht, M_{w} = 4000 | | | | | |

### Beispiel 7

### Säurekatalyse

Beispiel 2 wird im Mengenverhältnis 100 : 10 Gewichtsteilen Polyacrylsäure : HOM 154 wiederholt. Zu der homogenen, wäßrigen Mischung wird bei 25°C portionsweise der Katalysator zugegeben und bis zur Homogenisierung weitergerührt.
Trocknungsbedingungen: 6 min 200°C.

| Katalysator | pH-Wert | RK, trocken bei 25°C | RK, naß bei 25°C | RK, naß bei 80°C | RK bei 180°C | KV in % |
|---|---|---|---|---|---|---|
| ohne* | 2,8 | 219 | 195 | 161 | 195 | 1,0 |
| ohne | 2,8 | 260 | 181 | 48 | 163 | 4,1 |
| 1 % p-TS** | 2,6 | 248 | 173 | 46 | 159 | 3,9 |
| 2 % p-TS | 2,5 | 241 | 183 | 55 | 118 | 3,7 |
| 1 % NH₄Cl | 2,7 | 166 | 88 | 34 | 86 | 18,8 |
| 2 % HN₄Cl | 2,7 | 243 | 184 | 55 | 120 | 3,5 |
| 1 % H₂SO₄ | 2,2 | 228 | 176 | 47 | 143 | 3,3 |
| 4 % H₂SO₄ | 1,3 | 193 | 130 | 48 | 122 | 5,1 |
| 10 % H₂SO₄ | 1,0 | 171 | 123 | 35 | 89 | 6,8 |

| | | | | | | |
|---|---|---|---|---|---|---|
| ^{*)} Mengenverhältnis 100 : 5 | | | | | | |
| ^{**)} p-Toluolsulfonsäure | | | | | | |

### Beispiel 8

### Einfluß von pH-Wert

Beispiel 7 wird mit dem Unterschied wiederholt, daß die homogene, wäßrige Mischung bei 25°C portionsweise mit wäßrigem Ammoniak auf den entsprechenden pH-Wert eingestellt und dann auf eine Flottenkonzentration von 15 % verdünnt wird.
Trocknungsbedingungen: 6 min 220°C

| pH-Wert der Flotte | RK, trocken bei 25°C | RK, naß bei 25°C | RK, naß bei 80°C | RK bei 180°C | KV in % |
|---|---|---|---|---|---|
| 2,8 | 259 | 221 | 111 | 203 | 1,1 |
| 4,3 | 258 | 226 | 149 | 190 | 1,7 |
| 6,2 | 225 | 175 | 134 | 154 | 2,2 |

### Beispiel 9 und 10

### Einsatz von Dispersionen

### Beispiel 9

### Polymerzusammensetzung 63 Teile Butylacrylat, 30 Teile Methacrylsäure, 7 Teile Acrylnitril

Ein Gemisch aus 660 g Wasser, 0,8 g eines neutralisierten C₁₂-C₁₄-Alkylsulfonates und 80 g der Monomeremulsion wurden auf 85°C erhitzt und bei Erreichen einer Innentemperatur von 60°C mit 15 % einer Lösung von 9,6 g Natriumpersulfat in 375 g Wasser versetzt. Nach 15 min wurde begonnen, unter Aufrechterhaltung der Polymerisationstemperatur den Rest der Monomeremulsion in 120 min und den Rest der Initiatorlösung in 135 min kontinuierlich zuzufahren. Nach beendeter Zufuhr wurde weitere 60 min bei dieser Temperatur gehalten. Nach Abkühlen auf Raumtemperatur wird jeweils mit 0,2 % bzw. auf die Monomermasse einer wäßrigen Lösung von t-Butylhydroperoxid und Ascorbinsäure versetzt. Es wurde eine koagulat- und stippenfreie Dispersion mit einem Feststoffanteil von 40 %, einem pH-Wert von 2,9 und einer Lichtdurchlässigkeit (0,01 %ig) von 80 % erhalten.

Zusammensetzung der Monomeremulsion:

| | |
|---|---|
| 756 g | n-Butylacrylat |
| 360 g | Methacrylsäure |
| 84 g | Acrylnitril |
| 4,7 g | neutralisiertes C₁₂-C₁₄-Alkylsulfonat |
| 5 g | Natriumvinylsulfonat 25 %ig |
| 750 g | Wasser. |

### Beispiel 10

Beispiel 9 wird wiederholt, mit dem Unterschied, daß eine 45 %ige Polymerdispersion mit der Zusammensetzung von 73 Teilen Butylacrylat, 20 Teilen Methacrylsäure und 7 Teilen Acrylnitril hergestellt wurde. Der pH-Wert betrug 2,3, die Lichtdurchlässigkeit (0,01 %ig) wurde zu 77 % bestimmt.

Auf 100 Teile Dispersion wurden jeweils 20 Teile HOM 154 zugegeben und danach 30 min gerührt.
Trocknungsbedingungen: 6 min bei 230°C

| Probe | Anteile HOM 154 | RK, trocken bei 25°C | RK, naß bei 25°C | RK, naß bei 80°C | RK bei 180°C | KV in % |
|---|---|---|---|---|---|---|
| Bsp. 9 | 0 | 215 | 157 | 75 | 52 | 0,7 |
| Bsp. 9 | 20 | 229 | 211 | 185 | 76 | 0,9 |
| Bsp. 10 | 0 | 187 | 109 | 71 | 47 | 0,8 |
| Bsp. 10 | 20 | 223 | 159 | 110 | 77 | 0,7 |

## Patentansprüche

1. Formaldehydfreie Binde-, Imprägnier- oder Beschichtungsmittel, enthaltend
A) ein Polymerisat, welches zu 2 bis 100 Gew.-% aus einer ethylenisch ungesättigten Säure oder einem Säureanhydrid als Comonomer aufgebaut ist und
B) mindestens ein Polyol, ausgewählt aus
einem Triazin der Formel 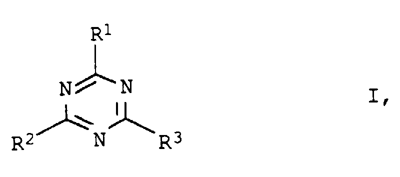 worin R¹ bis R³ unabhängig voneinander für einen Rest X[(CₘH₂ₘO)ₙH] oder N[(CₘH₂ₘO)ₙH]₂ mit X = NH, O, S, m = 2 bis 5 und n = 1 bis 10 stehen,
einem Triazintrion der Formel 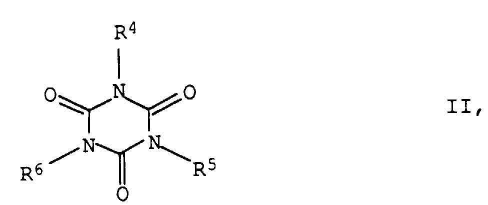 worin R⁴ bis R⁶ unabhängig voneinander für einen Rest [(CₘH₂ₘO)ₙH] mit m = 2 bis 5 und n = 1 bis 10 stehen,
oder einem Benzolderivat, bzw. einem Cyclohexylderivat, der Formel 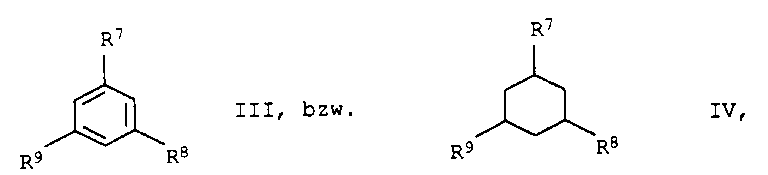 worin R⁷ bis R⁹ unabhängig voneinander für einen Rest [X(CₘH₂ₘO)ₙH], einen Rest N[CₘH₂ₘO)ₙH]₂, einen Rest [Y(CₘH₂ₘO)ₙH] oder einen Rest [(CₘH₂ₘO)ₙH] mit X = NH, O, S, Y = zweiwertige C₁-C₆-Alkyl- oder Acylgruppe, m = 2 bis 5 und n = 1 bis 10, stehen.

2. Formaldehydfreie Binde-, Imprägnier- oder Beschichtungsmittel nach Anspruch 1, wobei die Anteile A) und B) so gewählt werden, daß das Molverhältnis der Säure- und/oder Säureanhydridgruppen in A) zu Verbindungen B) 1000:1 bis 1:1 beträgt.

3. Verwendung von formaldehydfreien Binde-, Imprägnier- oder Beschichtungsmitteln gemäß Anspruch 1 zur Herstellung von gebundenen faserförmigen Flächengebilden.

4. Verwendung gemäß Anspruch 3, dadurch gekennzeichnet, daß es sich um ein Flächengebilde auf Basis von Glasfasern, Mineralfasern oder Polyesterfasern handelt.

5. Gebundene faserförmige Flächengebilde, erhältlich unter Verwendung eines formaldehydfreien Binde-, Imprägnier- oder Beschichtungsmittels gemäß Anspruch 1.

6. Verwendung von gebundenen, faserförmigen Flächengebilden gemäß Anspruch 5 als Inliner in bituminierten Dachbahnen, in Bodenbelägen, als Filtermaterial oder als Batterieseparatoren.

7. Verfahren zur Herstellung eines gebundenen, faserförmigen Flächengebildes, dadurch gekennzeichnet, daß ein formaldehydfreies Binde-, Imprägnier- oder Beschichtungsmittel gemäß Anspruch auf ein faserförmiges Flächengebilde aufgebracht und anschließend bei erhöhter Temperatur gehärtet wird.

## Claims

1. Formaldehyde-free binding, impregnating or coating compositions comprising
A) a polymer containing from 2 to 100% by weight of units derived from an ethylenically unsaturated acid or anhydride as comonomer, and
B) at least one polyol selected from
a triazine of the formula 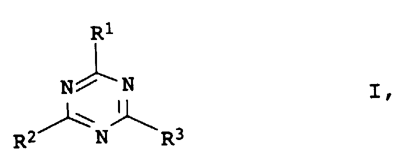 where R¹ to R³ are each independently of the others a radical X[(CₘH₂ₘO)ₙH] or N[(CₘH₂ₘO)ₙH]₂ where X is NH, O or S, m is from 2 to 5 and n is from 1 to 10,
a triazinetrione of the formula 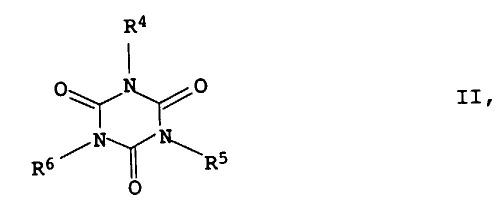 where R⁴ to R⁶ are each independently of the others a radical [(CₘH₂ₘO)ₙH] where m is from 2 to 5 and n is from 1 to 10,
and a benzene or cyclohexyl derivative of the formula 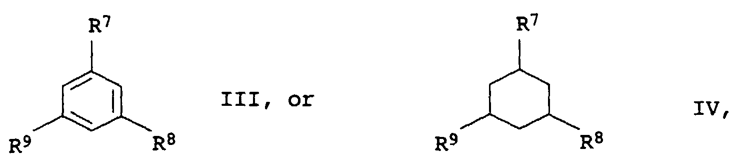 where R⁷ to R⁹ are each independently of the others a radical [X(CₘH₂ₘO)ₙH], a radical N[(CₘH₂ₘO)ₙH]₂, a radical [Y(CₘH₂ₘO)ₙH] or a radical [(CₘH₂ₘO)ₙH] where X is NH, O or S, Y is bivalent C₁-C₆-alkyl or acyl, m is from 2 to 5 and n is from 1 to 10.

2. A formaldehyde-free binding, impregnating or coating composition as claimed in claim 1, wherein the proportions of A) and B) are selected so that the molar ratio of the acid and/ or anhydride groups in A) to compounds B) is within the range from 1000:1 to 1:1.

3. The use of formaldehyde-free binding, impregnating or coating compositions as claimed in claim 1 for producing bonded fibrous sheet materials.

4. A use as claimed in claim 3, characterized in that the sheet material is based on glass fibers, mineral fibers or polyester fibers.

5. Bonded fibrous sheet materials obtainable using a formaldehyde-free binding, impregnating or coating composition as claimed in claim 1.

6. The use of bonded fibrous sheet materials as claimed in claim 5 as an inliner in bituminized roofing felts, in floor coverings, as a filter material or as battery separators.

7. A process for producing a bonded fibrous sheet material, characterized in that a formaldehyde-free binding, impregnating or coating composition as claimed is applied to a fibrous sheet material and then cured at elevated temperature.

## Revendications

1. Agent liant, d'imprégnation ou de revêtement sans formaldéhyde, contenant:
A) un polymère, constitué de 2 à 100 % en poids d'un acide à insaturation éthylénique ou d'un anhydride en tant que comonomère et
B) au moins un polyol, choisi parmi
une triazine de formule 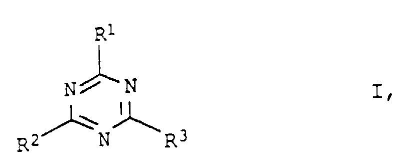 dans laquelle R¹ à R³ représentent indépendamment les uns des autres un groupement X [(CₘH₂ₘO)ₙH] ou N [(CₘH₂ₘO)ₙH]₂ avec X = NH, O, S, m = 2 à 5 et n = 1 à 10,
une triazinetrione de formule 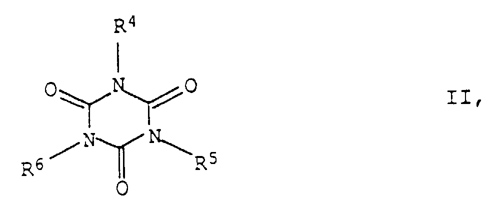 dans laquelle R⁴ à R⁶ représentent indépendamment les uns des autres un groupement [(CₘH₂ₘO)ₙH] avec m = 2 à 5 et n = 1 à 10,
ou un dérivé du benzène, respectivement un dérivé du cyclohexane de formule 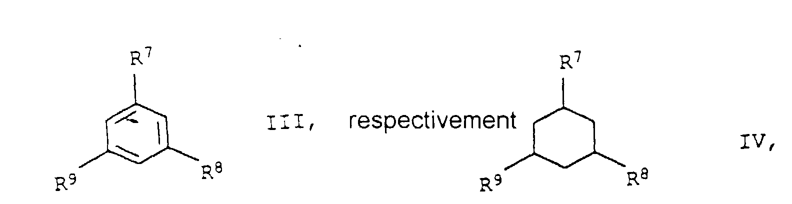 dans lesquelles R⁷ à R⁹ représentent indépendamment les uns des autres un groupement [X(CₘH₂ₘO)ₙH], un groupement N[(CₘH₂ₘO)ₙH]₂, un groupement [Y(CₘH₂ₘO)ₙH] ou un groupement [(CₘH₂ₘO)ₙH] avec X = NH, O, S, Y = groupement bivalent acyle ou alkyle en C₁-C₆, m = 2 à 5 et n = 1 à 10.

2. Agent liant, d'imprégnation ou de revêtement sans formaldéhyde selon la revendication 1, dans lequel les proportions de A) et B) sont choisies de sorte que le rapport en moles des groupements acide et/ou anhydride de A) aux composés B) s'élève de 1000 : 1 à 1 : 1.

3. Utilisation d'agents liants, d'imprégnation ou de revêtement sans formaldéhyde selon la revendication 1 pour la fabrication de nappes fibreuses liées.

4. Utilisation selon la revendication 3, caractérisé en ce qu'il s'agit d'une nappe à base de fibres de verre, de fibres minérales ou de fibres de polyester.

5. Nappe fibreuse liée, obtenue par l'utilisation d'un agent liant, d'imprégnation ou de revêtement sans formaldéhyde selon la revendication 1.

6. Utilisation de nappes fibreuses liées, selon la revendication 5 en tant qu'armature dans des pans de toit bitumés, dans des revêtements de sol, en tant que matériau filtrant ou que séparateurs de batterie.

7. Procédé de fabrication d'une nappe fibreuse liée, caractérisé en ce que, l'on applique un agent liant, d'imprégnation ou de revêtement sans formaldéhyde selon la revendication 1 sur une nappe fibreuse et qu'on le durcit ensuite par une élévation de la température.
